Europäisches Patentamt

European Patent Office

Office européen des brevets

(19)

(11) Publication number: **0 028 427**

**B1**

(12) **EUROPEAN PATENT SPECIFICATION**

(45) Date of publication of patent specification: **06.06.84**

(21) Application number: **80200975.3**

(22) Date of filing: **15.10.80**

(51) Int. Cl.³: **E 02 F 3/92, F 16 B 43/00, F 16 D 1/06**

(54) Device for mounting and removing a cutter at the end of the cutter shaft from a cutter dredge.

(30) Priority: **24.10.79 BE 197799**

(43) Date of publication of application:
**13.05.81 Bulletin 81/19**

(45) Publication of the grant of the patent:
**06.06.84 Bulletin 84/23**

(84) Designated Contracting States:
**DE FR GB NL**

(56) References cited:
**DE - A - 2 555 124**
**DE - C - 53 811**
**DE - C - 237 216**
**FR - A - 2 262 749**
**FR - A - 2 377 487**
**GB - A - 13 132**
**GB - A - 812 789**
**GB - A - 1 127 593**
**NL - A - 7 710 009**
**US - A - 1 427 807**
**US - A - 2 002 749**
**US - A - 3 608 933**

(73) Proprietor: **"Dredging International"**
**Scheldedijk, 30**
**B-2730 Zwijndrecht (BE)**

(72) Inventor: **Van Der Veken, Corneel Renaat Marie**
**Hoge Aardstraat, 57**
**B-2610 Wilrijk (BE)**

(74) Representative: **Pirson, Jean et al,**
**C/O Bureau GEVERS S.A. 7, rue de Livourne**
**B-1050 Brussels (BE)**

Courier Press, Leamington Spa, England.

## Description

The invention relates to a device for mounting and removing a cutter at the end of the cutter shaft of a cutter dredge, whereby the cutter boss is provided with an inner screw-thread and the cutter shaft with an outer screw-thread.

When dredgers are fitted with a cutter head, better known as a cutter, said cutter can be replaced by a new one. For this purpose the cutter is provided with an inner screw-thread and the cutter shaft is provided at the end thereof with an outer screw-thread.

The cutter may thus be screwed on said shaft till the cutter boss edge meets a collar on the shaft. The boss bottom can also meet the shaft end.

It is clear that under the action of the butting load-on on the cutter knives or teeth, said cutter is generally clamped very tightly on the shaft. Said cutter cannot generally be screwed off with the available torque from that motor driving the cutter shaft.

To obviate the above-defined drawback, there is generally mounted between the boss and a stop on the cutter shaft, a number of small blocks or a flanged plug. When replacing the cutter, the blocks or the flange are cut-through in such a way that the screw-thread load is removed and the cutter can easily be screwed off. In present-day suction dredges with large dredging capacity, use is generally made of steel blocks, also called cutting block. Cutting plugs between the cutter shaft end and boss bottom are less frequently used.

A similar solution derived from the construction according to German patent application 25 55 124 has also been applied. According to this construction, rings of varying conical cross sections are mounted between the pieces to be unlocked or unscrewed. One of these rings is made to break or is cut, which allows the cutter head to be screwed off from the cutter shaft.

The disadvantages which associate to the above mentioned operating method are as follows:

a) the cutting-through of said cutting blocks, cutting plugs or rings is a time-consuming operation which results in a long idle time of the dredge;

b) when cutting through the cutting blocks, the cutting plugs or the rings there is a severe danger of damaging the cutter shaft;

c) through the space present between the cutting blocks, sand and water may enter the screw-thread from the cutter and cutter shaft. Such entry of water and sand is the cause of corrosion and notch effect which may result in premature shaft breakage;

d) after every removing of the cutter, the screw-thread has to be cleaned and protected;

e) when removing the cutter, new blocks or a new cutting plug are to be arranged every time. Even if the protecting plug can be made more water-tight, it is also most expensive.

A system which makes use of cooperating toothed rings is described in US patent 3,608,933. The rings according to this invention are equipped with teeth slanting in the same direction as the screw-thread of the tubular members that are threaded together. By screwing further the tubular members or pipes to be assembled, the ring assembly will be further locked. Unlocking of the lock ring assembly needs the use of special appliances to hold both toothed rings in a determined relationship.

This invention has for an object to obviate the above drawbacks and to provide a device which makes it possible to remove rapidly said cutter and which insures moreover the best tightness against water and sand.

For this purpose, the device according to the invention is comprised of two concentric rings whose surfaces facing one another are provided with teeth fitting into one another, wherein the slanting of said teeth is opposite to the angle of said screw-threads, and means are provided to lock both rings, during the screwing of the cutter on the shaft, in such a rotational position relative to one another that the joint thickness thereof is greater than the joint thickness of the toothed rings when the teeth thereof have been completely rotated into one another.

In a preferred embodiment of the invention, a first toothed ring is connected to a bush which surrounds completely said first ring and at least partly the second ring.

In such an embodiment, said second ring which is surrounded partly at least by said bush, is provided with a collar the diameter of which is substantially equal to the diameter of said bush.

Useful said means to lock temporarily said toothed rings relative to one another, are formed by a pin which passes through said rings and/or parts connected thereto.

Preferably said pin is made from copper or such a metal which breaks readily with the rotating relative to one another of said toothed rings.

In a first embodiment, said toothed rings are mounted between the cutter boss and the enlarged portion of the cutter shaft.

In a second embodiment, said toothed rings are mounted inside the cutter boss between the boss bottom and the cutter shaft end.

Other details and features of the invention will stand out from the following description given by way of non limitative example and with reference to the accompanying drawings, in which:

Figure 1 is a side view with parts cut-away of the toothed rings and the components pertaining thereto, which comprise the device according to the invention in a first embodiment.

Figure 2 is a diagrammatic lengthwise section on a smaller scale, of the device according to the invention in said first embodiment, as mounted between the cutter boss and the enlarged portion of the cutter shaft.

Figure 3 is a diagrammatic lengthwise section on a smaller scale, of a second embodiment of the device according to the invention, as mounted on the cutter shaft end between the boss bottom and the cutter shaft end.

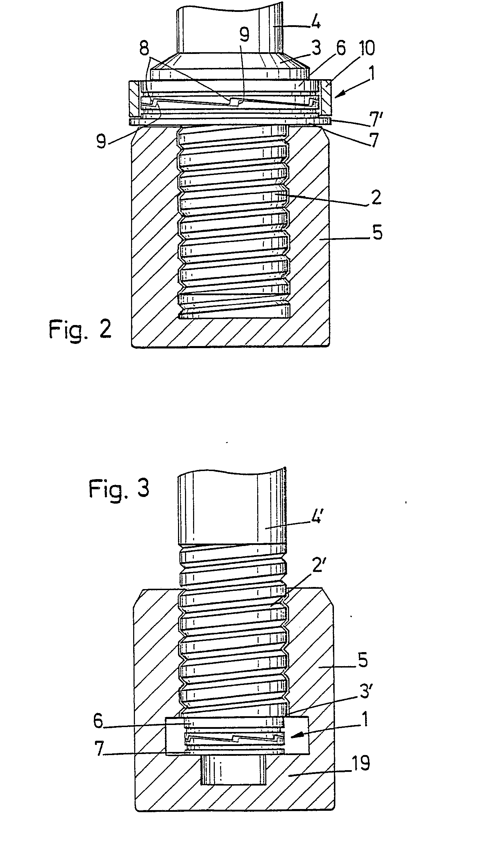

The device according to the invention is shown generally in figures 2 and 3 with reference number (1). Said device may thus as already mentioned, be mounted between that portion (2) provided with an outer screw-thread, and the enlarged portion or collar (3) of the cutter shaft (4) (fig. 2).

In the variation as shown in figure 3, the device (1) appears at the free end (3') of cutter shaft (4').

In both embodiments, the cutter boss (5) is provided with an inner screw-thread and portion (2—2') of cutter shaft (4—4') with an outer screw-thread.

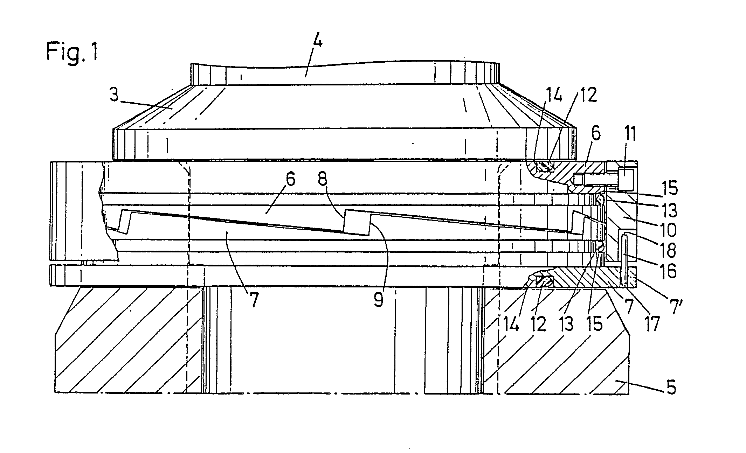

The device is shown in detail in cross-section in figure 1.

Said device is comprised mainly of two concentric toothed rings (6) and )7). Those ring surfaces facing one another have inclined teeth (8) and (9). The slanting of teeth (8) and (9) is opposite to the angle of screw-thread (2—2') provided on cutter shaft (4—4').

As shown in figure 1 the toothed rings (6) and (7) have a joint thickness which is somewhat thicker than when teeth (8) and (9) have been rotated completely into one another.

The slanting of teeth (8) and (9) is determined according to the desired ratio between the screw-down torque and the screw-off torque of the cutter on said cutter shaft.

Ring (6) is connected sidewise to a bush (10). Said connection can be made with bolts (11) or by welding. Said bush (10) thus surrounds completely the toothed ring (6) and partly toothed ring (7).

Said ring (7) is moreover provided with a collar (7').

Both toothed ring (6) and toothed ring (7) are provided with sealing rings (12) and (13) which prevent the flowing of water, mud or sand.

Said sealing rings (12) lie inside circle-like grooves (14) on those walls from rings (6) and (7) which face away from one another, while said sealing rings (13) are fastened sidewise inside similar circle-like grooves (15) from rings (6) and (7).

When mounting the cutter, the toothed rings (6) and (7) are so rotated relative to one another that the joint thickness thereof is increased but is not however maximized. In such a position, said rings (6) and (7) are locked relative to one another by means of a pin (16) from copper or brass, which fits through a bore (17) in collar (17') from ring (7) and through an opening (18) in bush (10).

Pin (16) has for its only purpose to lock toothed rings (6) and (7) in such a position relative to one another which prevents the teeth dropping into one another already during the mounting. For the mounting operation, the joint thickness of said rings should be thicker than the ring thickness when the teeth have completely meshed together. When screwing-off the cutter, the teeth slide in one another and there thus appears a play which helps said screwing-off.

The cutter is now rotated on the screw-thread end of the cutter shaft till the toothed rings are clamped between cutter boss (5) and the enlarged portion or collar (3) of the cutter shaft (4) or the cutter collar thereof (fig. 2). In the form of embodiment according to figure 3, the device (1) is clamped between the bottom (19) of the cutter boss and the end (3') of the cutter shaft (4') (fig. 3). In the form of embodiment according to figure 3, at least one of the toothed rings can take the shape of a toothed disk. The ring or disk most directed towards the bottom of the cutter boss can indeed in this form of embodiment be centered with respect to the cutter boss in a central opening thereof.

The device works essentially as follows: for the screwing-down of the cutter, the teeth (8) and (9) of toothed rings (6) and (7) will ride-up against one another with the result that the joint thickness of toothed rings (6) and (7) has a tendency to increase. Such motion is however slowed-down due to the friction between the inner tooth faces on the one hand and the outer faces of the toothed rings contacting the cutter boss or the enlarged portion of said cutter shaft on the other hand.

When screwing-off, that is reverse-rotating the cutter shaft the pin (16) breaks-off directly and the slanting angle of teeth (8) and (9) adds up to the slanting angle of the screw-thread on said cutter shaft and shaft end. The total slanting angle thus approximates the total friction angle of the screwed connection. There results therefrom the above-defined ratio between screwing-down torque and screwing-off torque. Such ratio is the same as the one with a much coarser screw-thread which cannot always be used due to technical reasons. The advantages of the structure according to the invention are notably as follows:

a) removing of the cutter is limited to a simple screwing-off thereof, which screwing-off is made possible by the above-defined working of the device according to the invention. It is thus no more required to take into account time losses due to cutting-through of cutting plug or blocks;

b) damages due to unintentional burning-in of the shaft end do not occur any more;

c) limited torsional straining of the cutter shaft and cutter chain when screwing-off;

d) perfect sealing between cutter and cutter shaft becomes possible in such a way that undesirable corrosion or notch effect does not occur any more;

e) the device always remains active.

It must be understood that the invention is in no way limited to the above embodiments and that many changes may be brought therein

## Claims

1. Device for mounting and removing a cutter at the end of the cutter shaft (4) of a cutter dredge, wherein the cutter boss (5) is provided with an inner screw-thread and the cutter shaft with an outer screw-thread (2, 2'), which device is comprised of two concentric rings whose surfaces facing one another are provided with inclined teeth (8, 9) fitting into one another, characterized in that the slanting of said teeth (8, 9) is opposite to the angle of said screw-threads (2, 2') and means (16) are provided to lock both rings (6, 7), during the screwing of the cutter on the shaft, in such a rotational position relative to one another that the joint thickness thereof is greater than the joint thickness of the toothed rings when the teeth thereof have been completely rotated into one another.

2. Device as defined in claim 1, in which one ring (6) is connected to a bush (10) which surrounds completely said ring (6) and at least partly the other ring (7).

3. Device as defined in claim 1, in which said other ring (7) which is surrounded partly, at least by said bush (10), is provided with a collar (7') the diameter of which is substantially equal to the diameter of said bush (10).

4. Device as defined in any one of claims 1 to 3, in which said means to lock temporarily said rings (6, 7) relative to one another, are formed by a pin (16) which passes through said rings and/or parts connected thereto.

5. Device as defined in claim 4, in which said pin (16) is made of copper or such a metal which breaks readily with the rotating relative to one another of said rings (6, 7).

6. Device as defined in any one of claims 1 to 5, in which said rings are provided with sealing rings (12) which are mounted inside circle-like grooves (14) which lie on those surfaces facing away from one another of the rings (6, 7).

7. Device as defined in any one of claims 2 to 6, in which along the outer circumference of said toothed rings are mounted sealing rings (13) which contact the inner edge of said bush (10).

8. Device as defined in any of claims 1 to 7, in which said toothed rings (6, 7) are mounted between the cutter boss (5) and an enlarged portion (3) of said cutter shaft (4).

9. Device as defined in any one of claims 1 to 7 in which said toothed rings (6, 7) are mounted inside the cutter boss (5), between the boss bottom (19) and the end of the cutter shaft (4).

10. Device as defined in claim 9, in which at least one of said rings is in the shape of a disk, when said rings (6, 7) are mounted between the cutter bottom (19) and the end of the cutter shaft (4).

## Revendications

1. Installation permettant le montage et le démontage d'un désintégrateur à l'extrémité d'un arbre (4) d'une drague à désintégrateur, dans laquelle le moyeu (5) du désintégrateur est pourvu d'un pas de vis interne et l'arbre est pourvu d'un pas de vis externe (2, 2'), installation qui consiste en deux anneaux concentriques dont les surfaces dirigées l'une vers l'autre sont équipées de dents inclinées (8, 9) qui s'adaptent les unes dans les autres, caractérisée en ce que la pente desdites dents (8, 9,) est opposée à l'angle desdits pas de vis (2, 2') et en ce que des moyens (16) sont prévus pour verrouiller les deux anneaux (6, 7) pendant le vissage du désintégrateur sur l'arbre, dans une position de rotation de l'un des anneaux par rapport à l'autre qui est telle que l'épaisseur totale de ceux-ci est supérieure à l'épaisseur totale des anneaux dentés lorsque les dents de ceux-ci ont complètement pénétré, par rotation, les unes dans les autres.

2. Installation selon la revendication 1, caractérisée en ce qu'un anneau (6) est relié à une couronne (10) qui entoure complètement l'anneau (6) et au moins partiellement l'autre anneau (7).

3. Installation selon la revendication 1, dans. laquelle l'autre anneau (7) qui est entouré partiellement au moins par la couronne (10) équipée d'un collier (7') dont le diamètre est sensiblement égal au diamètre de ladite couronne (10).

4. Installation selon l'une quelconque des revendications 1 à 3, caractérisée en ce que les moyens précités destinés à verrouiller temporairement lesdits anneaux (6, 7) l'un par rapport à l'autre, sont formés par une broche (16) qui traverse lesdits anneaux et/ou les éléments qui en font partie.

5. Installation selon la revendication 4, caractérisée en ce que ladite broche (16) est faite de cuivre ou d'un métal qui se rompt aisément lors de la rotation relative des anneaux (6, 7), l'un par rapport à l'autre.

6. Installation selon l'une ou l'autre des revendications 1 à 5, caractérisée en ce que lesdits anneaux (6, 7) sont pourvus de joints d'étanchéité (12) qui sont montés à l'intérieur de rainures circulaires (14) ménagées sur des surfaces disposées à l'opposé des anneaux (6, 7).

7. Installation selon l'une quelconque des revendications 2 à 6, caractérisée en ce que les joints d'étanchéité (13) sont montés sur la surface intérieure desdits anneaux dentés, lesquels joints d'étanchéité sont en contact avec le côté intérieur de ladite couronne (10).

8. Installation selon l'une quelconque des revendications 1 à 7, caractérisée en ce que lesdits anneaux dentés (6, 7) sont montés entre le moyeu (5) du désintégrateur et la partie élargie (3) de l'arbre (4), du désintégrateur.

9. Installation selon l'une quelconque des revendications 1 à 7, caractérisée en ce lesdits anneaux dentés (6, 7) sont montés à l'intérieur du moyeu (5) du désintégrateur, entre le fond (19) du moyeu et l'extrémité de l'arbre (4) du désintégrateur.

10. Installation selon la revendication 9, caractérisée en ce qu'au moins un de ces anneaux a la forme d'un disque, lorsque lesdits anneaux (6, 7) sont montés entre le fond (19) du moyeu du désintégrateur et l'extrémité de l'arbre (4) de celui-ci.

## Patentansprüche

1. Vorrichtung zum Montieren und Demontieren eines Schneidkopfes am Ende der Schneidkopfwelle (4) eines Saugkopfbaggers, wobei das Schneidwerkzeug (5) mit einem Innengewinde und die Schneidkopfwelle mit einem Außengewinde (2, 2') versehen ist und wobei zwei konzentrische Ringe vorgesehen sind, deren einander gegenüberliegende Flächen mit schrägen Zähnen (8, 9) versehen sind, die ineinandergreifen, dadurch gekennzeichnet, daß die Neigung der Zähne (8, 9) entgegengesetzt ist zu dem Steigungswinkel der Gewinde (2, 2'), und daß eine Einrichtung (16) vorgesehen ist zum Verriegeln der beiden Ringe (6, 7) während des Aufschraubens des Schneidkopfes auf die Welle in einer derartigen Drehstellung relativ zueinander, daß deren Verbindungsdicke größer ist als die Verbindungsdicke der gezahnten Ringe, wenn die Zähne dieser Ringe vollständig ineinander gedreht worden sind.

2. Vorrichtung nach Anspruch 1, dadurch gekennzeichnet, daß ein Ring (6) mit einer Buchse (10) verbunden ist, welche den Ring (6) vollständig und den anderen Ring (7) wenigstens teilweise umgibt.

3. Vorrichtung nach Anspruch 1, dadurch gekennzeichnet, daß der andere Ring (7), der wenigstens teilweise von der Buchse (10) umgeben ist, mit einem Kragen (7) versehen ist, dessen Durchmesser im wesentlichen gleich ist dem Durchmesser der Buchse (10).

4. Vorrichtung nach einem der Ansprüche 1 bis 3, dadurch gekennzeichnet, daß die Einrichtung zum vorübergehenden Verriegeln der Ringe (6, 7) relativ zueinander durch einen Stift (16) gebildet wird, welcher durch die Ringe und/oder die damit verbundenen Teile verläuft.

5. Vorrichtung nach Anspruch 4, dadurch gekennzeichnet, daß der Stift (16) aus kupfer oder einem Metall besteht, welches leicht bei einer Relativdrehung der Ringe (6, 7) bricht.

6. Vorrichtung nach einem der Ansprüche 1 bis 5, dadurch gekennzeichnet, daß die Ringe mit Dichtringen (12) versehen sind, welche innerhalb kreisförmiger Nuten (14) angeordnet sind, welche in den Flächen ausgebildet sind, die an den Ringen (6, 7) voneinander weggerichtet sind.

7. Vorrichtung nach einem der Ansprüche 2 bis 6, dadurch gekennzeichnet, daß längs des Außenumfangs der gezahnten Ringe Dichtringe (13) angeordnet sind, welche mit der Innenseite der Buchse (10) in Berührung sind.

8. Vorrichtung nach einem der Ansprüche 1 bis 7, dadurch gekennzeichnet, daß die gezahnten Ringe (6, 7) zwischen dem Schneidwerkzeug (5) und einem verbreiterten Abschnitt (3) der Schneidkopfwelle (4) angeordnet sind.

9. Vorrichtung nach einem der Ansprüche 1 bis 7, dadurch gekennzeichnet, daß die gezahnten Ringe (6, 7) innerhalb des Schneidwerkzeugs (5) zwischen dem Boden (19) des Werkzeugs und dem Ende der Schneidkopfwelle (4) angeordnet sind.

10. Vorrichtung nach Anspruch 9, dadurch gekennzeichnet, daß wenigstens einer der Ringe in Form einer Scheibe ausgebildet ist, wenn die Ringe (6, 7) zwischen dem Boden des Schneidwerkzeugs (19) und dem Ende der Schneidkopfwelle (4) angeordnet sind.

Fig. 1

Fig. 2

Fig. 3